# EUROPÄISCHE PATENTSCHRIFT

(11) **EP 0 694 469 B1**
(45) Veröffentlichungstag und Bekanntmachung des Hinweises auf die Patenterteilung: **02.09.1998**
(21) Anmeldenummer: 95111469.3
(22) Anmeldetag: 21.07.1995
(51) Int. Cl.: B62J 15/02

(54) **Schutzblechanordnung**
Mudguard arrangement
Garde-boue

(30) Priorität: 29.07.1994 DE 4426918
(43) Veröffentlichungstag der Anmeldung: 31.01.1996
(73) Patentinhaber: sks metaplast Scheffer-Klute GmbH, 59846 Sundern (DE)
(72) Erfinder: Belka, Heinrich, D-33818 Leopoldshöhe (DE)
(74) Vertreter: Fritz, Edmund Lothar

(56) Entgegenhaltungen:
- DE-A- 4 020 562
- FR-A- 2 443 372
- FR-A- 2 528 789
- GB-A- 29 780

## Beschreibung

Bei den modernen Fahrrädern ist es üblich, die Streben zur Halterung der Schutzbleche neben der Achse des betreffenden Rades zu befestigen. Diese Geometrie bedingt Strebenlängen, bei denen das Schutzblech nur in der konstruktiv vorgesehenen Stellung den gewünschten Abstand vom Radumfang hat. Wird die Strebe aus der konstruktiv vorgesehenen Position, beispielsweise bei einem Vorderrad, in Richtung auf den Gabelkopf verschwenkt, verringert sich der Abstand zwischen dem Schutzblech und dem Reifen. Eine solche Verschwenkung kann beispielsweise entstehen, wenn zwischen der Strebe und dem drehenden Rad ein länglicher Gegenstand, beispielsweise ein Ast, eingeklemmt wird. Das drehende Rad nimmt über den eingeklemmten Gegenstand die Strebe mit und, bedingt durch die geometrischen Verhältnisse, legt sich das Schutzblech am Reifen an, wodurch das Rad unmittelbar schlagartig blockiert wird.

Ähnliche Probleme können entstehen, wenn hochgeschleuderte Steine sich in dem Spalt zwischen Reifen und Schutzblech einklemmen, wodurch ebenfalls das Schutzblech in Richtung Gabelkopf mitgenommen wird. Diese Probleme sind umso gravierender, je weniger widerstandsfähig das Schutzblech ist. Bei den früher üblichen schweren Stahlblechschutzblechen war die Festigkeit so groß, daß mit den geschilderten Unfällen nicht zu rechnen war. Moderne dünnwandige Leichtmetallschutzbleche, ebenso wie Schutzbleche aus Kunststoff, bieten die Knickfestigkeit nicht und können deswegen auch die Strebe weniger sicher am richtigen Ort halten.

Um der Unfallgefahr durch Blockieren der Räder infolge einer Verschwenkung der Schutzblechstreben zu verhindern, ist es beispielsweise aus der DE-OS 40 20 562 bekannt, den Befestigungspunkt an der Vorderradgabel vom Ausfallende deutlich in Richtung auf den Gabelkopf zu versetzen. Im Normalzustand zeigt die Schutzblechstrebe dann schräg nach unten und, falls ein Hochschwenken erfolgt, vergrößert sich der Abstand zwischen Schutzblech und Reifen anstatt wie sonst bei Stand der Technik sich zu verringern.

Eine Möglichkeit, die Streben des Schutzblechs lösbar mit der Gabel zu verbinden, ist in der FR-A-2 443 372 beschrieben. Zum Zwecke einer einfacheren Montage des Schutzblechs wird hier gabelseitig ein Befestigungsmittel verwendet, in das die Streben senkrecht zur Radebene eingesteckt werden und nach Einrasten des Befestigungsmittels fest mit diesem verbunden sind. Der Wechsel eines Schutzblechs ist so ohne Werkzeug möglich, wobei im Gegensatz zur vorgenannten Lösung ein sicherer Sitz des Schutzblechs gewährleistet ist.

Eine andere Möglichkeit, lösbar die Streben des Schutzbleches mit der Gabel zu verbinden, ist in der FR-PS 2 528 789 beschrieben. Bei dieser Lösung ist an das dem Ausfallende benachbarte Ende der Strebe eine Öse angebogen, mit deren Hilfe die Strebe unter Zuhilfenahme einer Schraube an einer aus einer Blattfeder gebogenen Spange angeschraubt ist. Die Blattfederspange ist an dem von der Strebe abliegenden Ende gegabelt und kann so über das Gabelrohr übergeschoben werden. Diese Art der Verbindung läßt sich selbstverständlich bei geringer Krafteinwirkung lösen. Die Unfallgefahr durch eine am Reifen sich verklemmende Strebe ist hierbei beseitigt.

Allerdings läßt der Sitz der Spange auf dem Gabelrohr erheblich zu wünschen übrig. Das Gabelrohr verjüngt sich bekanntlich vom Gabelkopf in Richtung auf das Ausfallende und in Verbindung mit den beim Gebrauch auftretenden Erschütterungen hat die Spange die Tendenz, auf dem Gabelrohr in Richtung auf das Ausfallende zu rutschen. Dabei verliert die Spange den Halt und dort, wo das Gabelrohr in das flache Ausfallende übergeht, besteht eine erhöhte Gefahr, daß die Spange auch ohne größere Krafteinwirkung allein aufgrund der Erschütterungen von dem Gabelrohr abrutscht.

Ausgehend hiervon ist es Aufgabe der Erfindung, eine Schutzblechanordnung zu schaffen, die einerseits einen sicheren Halt der Schutzblechstreben gewährleistet und andererseits nicht die Gefahr eines Blockierens des Rades beinhaltet.

Diese Aufgabe wird erfindungsgemäß durch die Schutzblechanordnung mit den Merkmalen des Anspruches 1 gelöst.

Infolge der starren Anbringung der Rasteinrichtung an der Gabel bzw. deren Ausfallende bleibt der Verankerungspunkt der Strebe an der Gabel fest. Die Rasteinrichtung kann sich auch nicht bei Erschütterungen vom Befestigungsort entfernen, womit insoweit die konstruktiven Verhältnisse erhalten bleiben. Hingegen ist die Verbindung zwischen Strebe und Rasteinrichtung trennbar. Sollte sich zwischen dem Schutzblech und dem Reifen ein Stein einklemmen oder ein länglicher Gegenstand in die Speichen gelangen, was beides zu einer Mitnahmewirkung des Schutzbleches bzw. der Strebe durch das sich drehende Rad führt, kann keine Blockierung zustandekommen, denn die Rasteinrichtung gibt beim Überschreiten einer vorbestimmten Kraft, die noch keine gefährliche Situation hervorrufen kann, die Strebe frei und somit ist eine Blockierung des betreffenden Rades ausgeschlossen. Dabei wird insbesondere ein guter Schutz für das Vorderrad erzeugt, dessen schlagartige Blockierung zu einem Überschlag führen kann.

Die einfachste Möglichkeit, die Rastmittel zu erhalten, besteht darin, das betreffende Ende der Strebe entsprechend zu verdicken. Diese Verdickung kann in einfachster Weise durch eine Öse geschehen, die beispielsweise an die drahtförmige Strebe angebogen ist. Die Öse hat einen den Vorteil, der darin, besteht, die Strebe gegen Verdrehen um ihre Längsachse zu sichern und außerdem gestattet sie eine hinreichend enge Passung in der Rasteinrichtung, wodurch gute Seitenführungseigenschaften zustandekommen. Bei dieser Öse kann es sich um diejenige Öse handeln, die bei den Streben nach dem Stand der Technik bisher dazu verendet wurde die Strebe am Ausfallende unmittelbar anzuschrauben. Ferner vermeidet die Öse eine Schwächung der Strebe verglichen mit bspw. einer eingestochenen Nut.

Eine gute Stabilisierung des Schutzbleches gegen Schwingungen wird erhalten, wenn auf jeder Seite des Schutzbleches wenigstens zwei V-förmig in Richtung auf die Gabel konvergierende Streben vorgesehen sind, die zweckmäßigerweise dort einstückig ineinander übergehen. Die Übergangsstelle kann wiederum zu einer Öse gebogen sein, so daß dieselben Rasteinrichtungen verwendet werden können, wie im Falle einer Einzelstrebe je Seite des Rades. Infolge der Öse oder Schlaufe entsteht im Anschluß an diese vor dem Übergang in den gestreckten Abschnitt der Streben eine Einschnürung oder Verjüngung, die mit der Rasteinrichtung in der gewünschten Weise zusammenwirkt.

Die Rasteinrichtung ist vorteilhafterweise ein mit einer entsprechenden Tasche versehenes Gehäuse, das beispielsweise mittels Schrauben an der Gabel bzw. deren Ausfallende befestigt ist.

Die Tasche ist schlitzförmig und an die Kontur des betreffenden Strebenendes angepaßt, um eine gute Halterung der Strebe sicherzustellen. Die Verwendung einer Tasche in dem Gehäuse legt ferner zwangsläufig den Einsteckhub der Strebe beim Einführen in die Rasteinrichtung fest. In dieser Richtung wirkende Druckkräfte vermögen folglich die Lage der Strebe in der Rasteinrichtung nicht zu verändern.

Um die Rastwirkung zu erzielen, enthält das Gehäuse blattfederartige Rastglieder, die vorzugsweise die schmalen Seitenwände der taschenförmigen Ausnehmung in dem Gehäuse darstellen. Hierdurch vereinfacht sich erheblich die Herstellung und auch die Stabilität ist maximal.

Im übrigen sind Weiterbildungen der Erfindung Gegenstand von Unteransprüchen.

In der Zeichnung ist ein Ausführungsbeispiel des Gegenstandes der Erfindung dargestellt. Es zeigen:
Fig. 1 den Vorderbau eines Fahrrades mit einem erfindungsgemäß gehalterten Fahrradschutzblech in einer Seitenansicht,
Fig. 2 die Rasteinrichtung und das Strebenende der Schutzblechanordnung nach Fig. 1, in einer vergrößerten perspektivischen Darstellung, und
Fig. 3 die Rasteinrichtung nach Fig. 2 in einem Längsschnitt längs der Linie I-I nach Fig. 1.

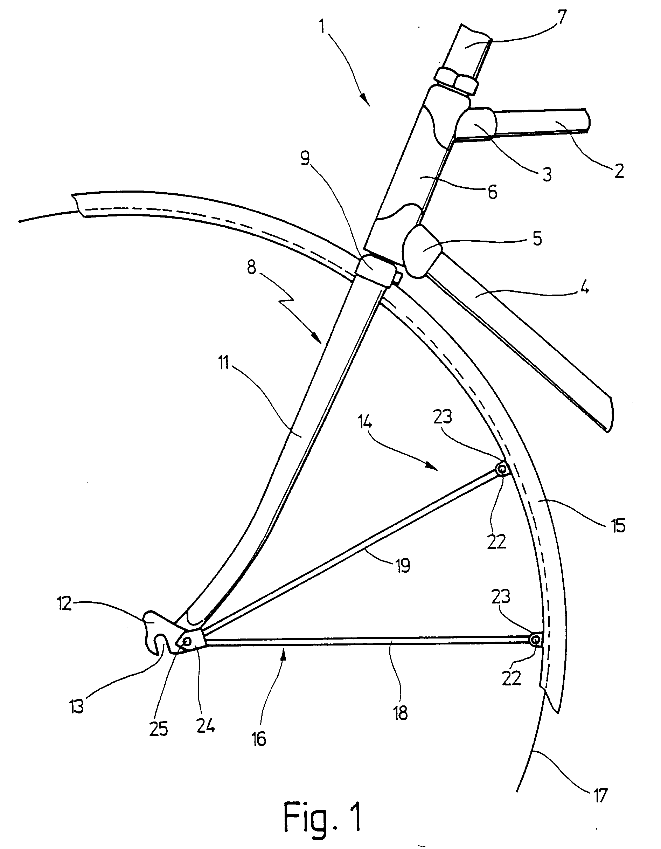

In Fig. 1 ist im Ausschnitt und schematisch ein Vorderbau 1 eines Fahrrades dargestellt, dessen oberes Rahmenrohr 2 über eine Lenkkopfmuffe 3 und dessen unteres Rahmenrohr 4 über eine Lenkkopfmuffe 5 mit einem Lenkkopfrohr 6 verbunden ist. Das Lenkkopfrohr 6 erstreckt sich zwischen den beiden Lenkkopfmuffen 3 und 5.

In dem Lenkkopfrohr 6 ist ein Gabelschaftrohr 7 einer Vorderradgabel 8 drehbar gelagert. Die Gabel 8 weist einen Gabelkopf 9 auf, an dessen Oberseite das erwähnte Gabelschaftrohr 7 befestigt ist und von dem nach unten parallel und im Abstand zwei Gabelrohre 11 wegführen. Aus Darstellungsgründen ist von den beiden Gabelrohren 11 lediglich das dem Betrachter zugekehrte sichtbar. Beide Gabelrohre 11 tragen an ihrem freien unteren Ende eine Platte 12, die das Ausfallende der Gabelrohr 11 darstellt. In diesen Ausfallenden 12 ist in bekannter Weise ein nach unten offener Schlitz 13 enthalten, der der Aufnahme einer Achse dient.

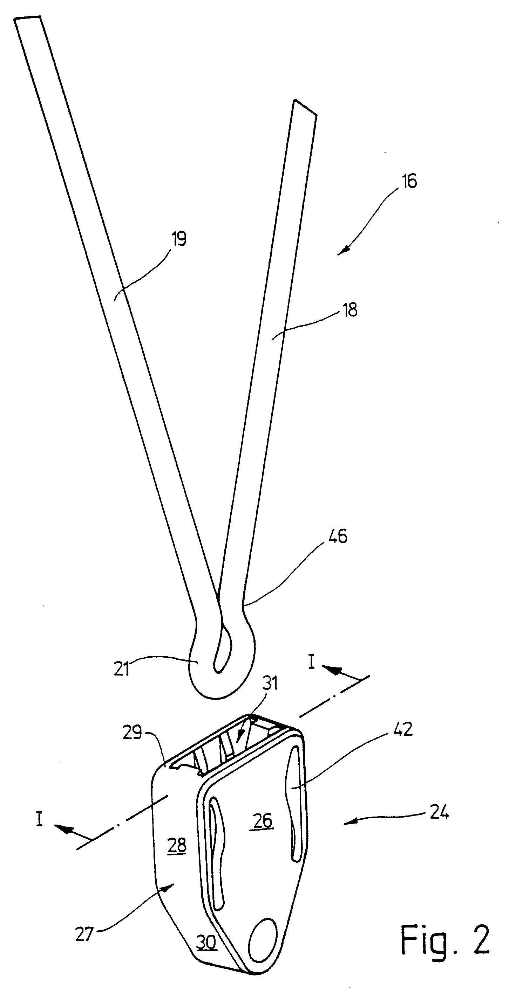

Mit der Vorderradgabel 8 ist eine Schutzblechanordnung 14 aus einem Schutzblech 15 und einer Strebenanordnung 16 verbunden. Das Schutzblech 15 umgibt in bekannter Weise konzentrisch ein durch eine Kreisbogenlinie schematisch veranschaulichtes Vorderrad 17, das in der Gabel 8 befestigt ist. Die Strebenanordnung 16 umfaßt auf jeder Seite des Rades 17 zwei einstückig miteinander verbundene drahtförmige Streben 18 und 19, die in Richtung auf das Ausfallende 12 konvergieren und folglich in radialer Richtung, bezogen auf das Ausfallende 12, nach außen divergieren. Die beiden drahtförmigen Streben 18 und 19 auf jeder Seite des Rades sind, wie Fig. 2 zeigt, an demjenigen Ende, an dem sie aufeinander zu laufen, einstückig unter Ausbildung einer Schlaufe oder Öse 21 miteinander verbunden. Die hiervon abliegenden freien Enden der Streben 18, 19 sind in bekannter Weise, beispielsweise mittels Klemmgliedern 22, an Blechlaschen 23 befestigt, die ihrerseits an der Innenseite des Schutzbleches 15 angenietet sind.

An ihrem der Achse des Rades 17 benachbarten Ende sind die beiden Streben 18, 19 in eine Rasteinrichtung 24 eingesteckt und dort verrastet. Die Rasteinrichtung 24 ist mit Hilfe einer Schraube 25, die durch eine entsprechende Bohrung in der Platte 12 hindurchgeht, an der Platte 12 befestigt, und zwar an der Außenseite der Gabel 8.

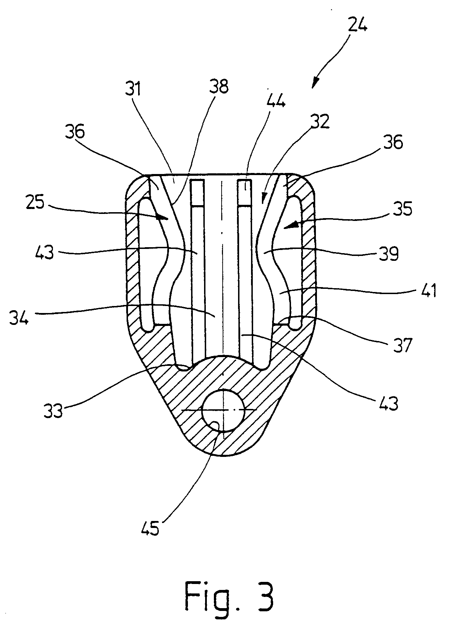

Die Rasteinrichtung 24 ist ein Kunststofformteil mit der in den Fig. 2 und 3 gezeigten Gestalt.

Das Kunststofformteil ist ein etwa quaderförmiger Körper mit zwei zueinander parallelen Flachseiten 26, die über eine Seitenwandanordnung 27 miteinander verbunden sind. Die Seitenwandanordnung 27 bildet zwei parallel und im Abstand zueinander verlaufende längliche Schmalseiten 28, zwischen denen sich eine querverlaufende Schmalseite 29 erstreckt. Am von der querverlaufenden Schmalseite abliegenden Ende gehen die schmalen Längsseiten in zwei konvergierende Seitenwandabschnitte 30 über. In der Draufsicht hat damit die Rasteinrichtung 24 die Gestalt eines Quadrates, das an einer Seite an ein gleichschenkliges Dreieck angrenzt.

In der querverlaufenden Schmalseite 29 ist eine etwa rechteckige Einstecköffnung 31 enthalten, die der Eingang zu einer im Inneren der Rasteinrichtung 24 enthaltenen Tasche 32 ist. Die Tasche 32 endet an ihrem von der Einstecköffnung 31 abliegenden Ende stumpf an einer Bodenwand 33. Ferner ist die Tasche 32 von zwei Seitenwänden 34, die parallel und im Abstand zueinander verlaufen und zwei schmalen Seitenwänden 35 begrenzt. Die Seitenwände 34 bilden die Innenseiten der beiden Flachseiten 26 und es ist aus Fig. 3 aus Darstellungsgründen lediglich die hintere Seitenwand 34 ersichtlich. Die schmalen Seitenwände 35 dagegen sind Blattfedern, die in der Nähe der Bodenwand 33 einstückig in das Formteil übergehen und auch an ihrem oberen Ende bei 36 einstückig an den Rand der Einstecköffnung 31 angeformt sind. Wie Fig. 3 erkennen läßt, sind beide Blattfedern 35, beginnend an der Übergangsstelle 36 bei der Einstecköffnung 31 bis hin zu ihrem unteren Ende 37 seitlich nicht mit der jeweils benachbarten Seitenwand 34 verbunden. Zwischen der sie überdeckenden Seitenwand 34 und ihren in Fig. 3 sichtbaren Flanken besteht ein Spalt von ca. 0,8 mm.

Die beiden Blattfedern 35 haben zueinander spiegelbildliche Gestalt und beginnen bei der Einstecköffnung 31 mit einem geraden Abschnitt 38. Diese beiden Abschnitte 38 konvergieren, ausgehend von der Einstecköffnung 31, in Richtung auf das Innere der Tasche 32. Die geraden Abschnitte 38 gehen im Abstand zu der Einstecköffnung 31 in einen bogenförmigen Bereich 39 über, an den sich ein weiterer bogenförmiger Bereich 41 anschließt, der die umgekehrte Krümmung hat und bei 37, also dem Ende der Blattfeder 35 seinerseits endet. Im Inneren der Tasche 32 erweitert sich somit unterhalb des geschwungenen Bereichs 39 der lichte Querschnitt der Tasche 32 erneut, wobei der Abstand, den dort die Blattfedern 35 voneinander haben, der Breite der Schlaufe 21 entspricht. Die Blattfedern 35 haben durchgehend konstanten rechteckigen Querschnitt.

Aus Gründen der Einfachheit des Herstellungswerkzeuges sind zwischen den Blattfedern 35 und den schmalen Längsseiten 28 in der Rasteinrichtung 24 Durchgangsöffnungen 42 enthalten, deren eine Seitenwand der Kontur der betreffenden Blattfeder 35 folgt. In diese Öffnungen 42 greifen zwei Schieber des Spritzwerkzeugs ein, um die Rückseite der Blattfeder 35 zu gestalten, ohne daß das Äußere der Rasteinrichtung 24 die gleiche eigenartig geschwungene Gestalt bekommt. Andererseits erhöhen die durchgehenden schmalen Längsseiten 28 insgesamt die Steifigkeit der Rasteinrichtung 24 und sie verbessern die weiter unten beschriebene Wirksamkeit der Blattfedern 35.

Zur besseren Führung der Schlaufe 21 sind auf den beiden einander gegenüberstehenden Seitenwänden 34 insgesamt vier Leisten 43 ausgebildet, die sich bezüglich der Öffnung der Tasche 32 paarweise gegenüberstehen. Die Leisten 43 sind bei der Einstecköffnung 41 mit einer Abschrägung 44 versehen. Den Abstand, den die freien Flächen der Leisten 43 voneinander haben, entspricht dem Drahtdurchmesser der Schlaufe 21.

Schließlich enthält die Rasteinrichtung 24 an ihrem unteren Ende, also im dreieckförmigen Bereich, eine Durchgangsbohrung, durch die die Schraube 25 zwecks Anbringung am Ausfallende 12 hindurchführt.

Die Wirkungsweise der insoweit beschriebenen Schutzblechanordnung ist wie folgt:

An dem Schutzblech 15, das aus einem dünnen Aluminiumblech oder einer Kunststoffolie besteht - solche Schutzbleche sind unter der Bezeichnung "Chromoplastics" bekannt -, werden die Blechlaschen 23 angenietet. In die an diesen angebrachten Klemmstücke werden die freien Enden der Strebenanordnung 16 eingesteckt und festgeklemmt. Die Länge der Streben 18, 19 richtet sich dabei nach dem gewünschten Durchmesser des Rades 17 und dem Abstand des Schutzblechs 15 von der Lauffläche des Rades 17.

Auf die insoweit montierte Einheit aus Schutzblech und den beiden Strebenanordnungen 16 werden die Rasteinrichtungen 24 aufgesteckt. Dabei dringt die Schlaufe 21 durch die Einstecköffnung 31 hindurch in die Tasche 32 ein. Weil der Außendurchmesser der Schlaufe 21 größer ist als der kleinste Abstand, den die beiden Blattfedern 35 im Bereich der Abschnitte 39 voneinander haben, kann das weitere Einführen der Schlaufe 21 nur unter gleichzeitigem Zurückdrängen der beiden Blattfedern 35 nach außen erfolgen. Diese Ausweichbewegung der Blattfedern 35 ist ohne weiteres möglich, denn sie sind lediglich bei der Einstecköffnung 31 und an ihrer Wurzel 37 mit den restlichen Strukturelementen der Rasteinrichtung 24 verbunden. Insbesondere sind sie im Bereich der Öffnungen 42 nach außen zu elastisch frei beweglich.

Das Zusammenstecken der Rasteinrichtung 24 mit den Strebenanordnungen 16 ist beendet, sobald die Schlaufe 21 auf der Bodenwand 33 der Tasche auftrifft. In dieser Stellung ist die Rasteinrichtung 24 auf der betreffenden Strebenanordnung 16 fest verrastet, denn die Schlaufe 21 geht, wie Fig. 2 erkennen läßt, in Richtung auf die geraden Abschnitte der beiden Streben 18, 19 in eine Einschnürung 46 über, deren Breite kleiner ist als der kleinste Abstand zwischen den beiden Blattfedern 35. Da die Schlaufe 21 im übrigen an der Außenseite kreisrund ist, ist eine begrenzte Schwenkbewegung der Rasteinrichtung 24 auf der Schlaufe 21 möglich, solange, bis die geraden Abschnitte 38 der Blattfedern 35 an der jeweils benachbarten Strebe 18 oder 19 anliegen. Andererseits sind die Abmessungen aber so getroffen, daß durch die Blattfedern 35 die Schlaufe 21 fest gegen die Bodenwand 33 angepreßt wird.

Der Monteur kann nun in bekannter Weise die vollständig vorbereitete Schutzblechanordnung 14 an der Vorderradgabel 8 montieren. Hierzu steckt er eine Befestigungsschraube durch die Bohrung 45 und eine entsprechende Bohrung in dem Ausfallende 12 und sichert die Schraube mit einer entsprechenden Mutter. Die Anbringung des Schutzblechs 15 an dem Gabelkopf 9 erfogt in bekannter Weise.

In seinem Äußeren unterscheidet sich die Strebenanordnung 14 einschließlich der Rasteinrichtung 24 kaum merkbar von den üblichen Befestigungen von Schutzblechen, bei denen die Schlaufen 21 unmittelbar an dem Ausfallende 12 festgeschraubt sind.

Sollte dem Benutzer des Fahrrades mit der erfindungsgemäßen Schutzblechanordnung 14 das Mißgeschick widerfahren, daß sich ein hochgeschleuderter Stein zwischen die Umfangsfläche des Rades 17 und dem Schutzblech 15 einklemmt und von dem Rad 17 weiter nach oben in Richtung Gabelkopf 9 befördert wird, können dennoch keine gefährlichen Situationen eintreten. Falls der eindringende und vom Reifen des Rades 17 mitgenommene Stein bestrebt ist das Schutzblech 15 zu stauchen, werden durch diese Bewegung die beiden Strebenanordnungen 16 aus ihren Rasteinrichtungen 24 herausgezogen. Damit ist die Gefahr beseitigt, daß die am Radumfang nach oben wandernden Streben 18 oder 19, deren Länge kürzer bemessen ist als der Durchmesser des Rades 17, das nach oben mitgenommen Schutzblech 15 gegen den Reifen ziehen und durch die dann auftretende selbsthemmende Wirkung am Reifen des Rades 17 das Rad 17 blockieren.

Gleiches gilt auch falls in die Speichen ein Holzstock oder Ast gelangt, der vom sich drehenden Rad 17 nach oben zu den Streben 18 und 19 mitgenommen wird. Auch hier löst sich die Verrastung und verhindert eine Gefährdung infolge einer selbsthemmenden Wirkung zwischen dem an den Streben 18, 19 gefesselten Schutzblech 15 und dem Reifen des Rads 17. Das Schutzblech 15 kann nach der Auslösung der Verrastung ausweichen. Bei den bekannten starren Befestigungen der Streben 18, 19 hätte dieser Stock die Streben nach oben geschwenkt, die dann wegen ihrer abnehmenden effektiven Länge das Schutzblech gegen den Reifen gezogen und dadurch das Rad 17 blockiert hätten, obwohl der Holzstock oder Zweig ohne weiteres und ohne nennenswerten Schaden, beispielsweise an den Gabelrohren 11, zerbrochen wäre. Bei der neuen Schutzblechanordnung ist eine solche Gefahr nicht gegeben.

Im allgemeinen entwickeln sich bei der neuen Schutzblechanordnung die Verhältnisse nicht einmal so weit, daß das Schutzblech 15 beschädigt wird, weil vorher die Schlaufe 21 aus der Rasteinrichtung 24 herausgezogen wird. Der Benutzer des Fahrrades kann hinterher ohne weiteres die Schlaufe 21 erneut in die Rasteinrichtung 24 hineindrücken, womit die ordnungsgemäße Befestigung des Schutzbleches wieder hergestellt ist.

Bei einer anderen Ausführungsform der Schutzblechanordnung ist je Seite des Schutzbleches 15 jeweils nur eine Strebe vorhanden, beispielsweise im Falle der Anwendung bei einem Hinterrad, wo das Schutzblech ohnehin an der Hintergabelstrebe und dem Hintergabelrohr angebracht werden kann. Auch bei der Variante mit lediglich einer Strebe je Seite kann die beschriebene Rasteinrichtung 24 in unveränderter Form verwendet werden. Es genügt, wenn an das betreffende Ende der Einzelstrebe eine Schlaufe oder Öse angebogen wird, wie die Schlaufe oder Öse 21 aus Fig. 2.

Fig. 1 läßt noch ein weiteres erkennen. Sollte die Strebe oder Strebenanordnung 16 aus der Rasteinrichtung 24 freigekommen sein, während sich das Rad 17 in Vorwärtsrichtung, also bezogen auf Fig. 1 im Gegenuhrzeigersinne dreht, kann es insbesondere bei Einzelstreben geschehen, daß die Strebe mit ihrem nun freien Ende nach unten fällt und durch seitliche Schlingerbewegungen des Fahrrades zwischen die Speichen gerät. Die Speiche würde anschließend von der betreffenden Speiche nach oben bewegt werden. Da ihre Länge wegen der Verwendung der Rasteinrichtung 24 aber kürzer ist als es an der ungünstigsten Stelle dem Abstand zwischen dem Schutzblech 15 und dem Umfang der Radnabe entspricht, bewegt die betreffende Speiche des Rades 17 die Strebe ohne weiteres und ohne Verklemmung an der Nabe vorbei. Oberhalb der Nabe des Rades 17 würde die die Strebe mitnehmende Speiche aber nicht mehr auf die Strebe zu, sondern von dieser weg laufen und sich damit gefahrlos wieder von der Strebe trennen. Eine Blockierung des Rades 17 durch eine ausgerastete Strebe ist somit ebenfalls ausgeschlossen.

## Patentansprüche

1. Schutzblechanordnung (14) für Räder (17) von Zweiradfahrzeugen insbesondere von Fahrrädern, die Gabeln (8) aufweisen, an deren Ausfallenden (12) die Räder (17) befestigt sind, mit einem Schutzblech (15) aus Metall oder Kunststoff, mit wenigstens einer Strebe (18, 19) auf jeder Seite des Rades (17), die mit ihrem radial außen liegenden Ende an dem Schutzblech (15) befestigt ist und die an ihrem radial innen liegenden Ende ein Rastmittel (21) aufweist, mit einer Rasteinrichtung (24), die an der Gabel (8) starr befestigt ist und dazu dient das Rastmittel (24) des radial innen liegenden Endes der jeweiligen Strebe (18, 19) rastend aufzunehmen, dadurch gekennzeichnet, daß die Strebe (18, 19) als Rastmittel (21) eine Verdickung aufweist und sich eine Rastrichtung parallel zur Radebene ergibt.

2. Schutzblechanordnung nach Anspruch 1, dadurch gekennzeichnet, daß die als Rastmittel (21) dienende Verdickung von einer Öse gebildet ist.

3. Schutzblechanordnung nach Anspruch 2, dadurch gekennzeichnet, daß die Strebe (18, 19) aus Draht besteht und daß die Öse von einer Schlaufe (21) gebildet ist, zu der die Strebe gebogen ist.

4. Schutzblechanordnung nach Anspruch 1, dadurch gekennzeichnet, daß auf jeder Seite des jeweiligen Rades (17) zwei Streben (18, 19) vorhanden sind, die an ihrem radial innen liegenden Ende mit Rastmitteln (21) versehen sind.

5. Schutzblechanordnung nach Anspruch 4, dadurch gekennzeichnet, daß die beiden auf derselben Seite liegenden Streben (18, 19) ein gemeinsames Rastmittel (21) aufweisen.

6. Schutzblechanordnung nach Anspruch 4, dadurch gekennzeichnet, daß die beiden auf derselben Seite liegenden Streben (18, 19) einstückig miteinander verbunden sind.

7. Schutzblechanordnung nach Anspruch 4, dadurch gekennzeichnet, daß die beiden Streben (18, 19) in einer Schlaufe (21) ineinander übergehen, die das Rastmittel bildet.

8. Schutzblechanordnung nach Anspruch 7, dadurch gekennzeichnet, daß im Anschluß an die Schlaufe (21) der Abstand der beiden Streben (18, 19) voneinander geringer ist als die Breite der Schlaufe (21).

9. Schutzblechanordnung nach Anspruch 1, dadurch gekennzeichnet, daß die Rasteinrichtung (24) ein an dem Ausfallende (12) der betreffenden Gabel (8) befestigbares Gehäuse mit einer Einstecköffnung (31) für die jeweilige Strebe (18, 19) aufweist.

10. Schutzblechanordnung nach Anspruch 9, dadurch gekennzeichnet, daß das Gehäuse im Anschluß an die Einstecköffnung (31) eine das betreffende Strebenende aufnehmende Tasche (32) aufweist.

11. Schutzblechanordnung nach Anspruch 9, dadurch gekennzeichnet, daß das Gehäuse wenigstens eine Blattfeder (35) enthält.

12. Schutzblechanordnung nach den Ansprüchen 9 und 11, dadurch gekennzeichnet, daß sich die Blattfeder (35) im Inneren des Gehäuses im Anschluß an die Einstecköffnung (31) befindet.

13. Schutzblechanordnung nach Anspruch 12, dadurch gekennzeichnet, daß in dem Gehäuse zwei Blattfedern (35) enthalten sind, die sich bezüglich einer durch die Einstecköffnung (31) führenden und auf der die Einstecköffnung (31) enthaltenden Ebene senkrecht stehenden Geraden diametral gegenüberliegen.

14. Schutzblechanordnung nach Anspruch 12 oder 13, dadurch gekennzeichnet, daß die Blattfeder (35) oder die Blattfedern (35) eine bzw. zwei Seitenwände der Tasche (32) bilden.

15. Schutzblechanordnung nach Anspruch 12 oder 13, dadurch gekennzeichnet, daß die Blattfeder (35) oder die Blattfedern (35) bei der Einstecköffnung (31) einstückig mit dem Gehäuse verbunden ist bzw. sind.

16. Schutzblechanordnung nach Anspruch 13, dadurch gekennzeichnet, daß die Blattfedern (35) eine Einschnürung in der Tasche (32) bilden.

17. Schutzblechanordnung nach Anspruch 9, dadurch gekennzeichnet, daß das Gehäuse (24) an einem Ende eine Befestigungsbohrung (45) für eine Befestigungsschraube (25) aufweist.

## Claims

1. Mudguard arrangement (14) for the wheels (17) of two-wheeled vehicles, particularly of bicycles, comprising forks (8) to the blade ends (12) of which the wheels (17) are fastened, with a mudguard (15) of metal or plastics material, with at least one stay (18, 19) on each side of the wheel (17) which with its end positioned radially on the outside is fastened to the mudguard (15) and which at its end positioned radially on the inner side comprises locking means (21) having a locking element (24) rigidly fastened to the fork (8) and serving the purpose of receiving the locking means (24) of the end of the respective stay (18, 19) positioned radially on the inner side in an arresting manner, characterised in that the stay (18, 19) comprises a thickened portion as locking means (21) and a direction of arresting parallel to the plane of the wheel is achieved.

2. Mudguard arrangement as claimed in claim 1, characterised in that the thickened portion serving as locking means (21) is formed by a lug.

3. Mudguard arrangement as claimed in claim 2, characterised in that the stay (18, 19) consists of a wire and that the lug is formed by a loop (21) formed by bending the stay.

4. Mudguard arrangement as claimed in claim 1, characterised in that on each side of the respective wheel (17) two stays (18, 19) are provided which comprise locking means (21) at their ends positioned radially on the inner side.

5. Mudguard arrangement as claimed in claim 4, characterised in that the two stays (18, 19) positioned on the same side comprise common locking means (21).

6. Mudguard arrangement as claimed in claim 4, characterised in that the two stays (18, 19) positioned on the same side are connected to each other so as to form one piece.

7. Mudguard arrangement as claimed in claim 4, characterised in that the two stays (18, 19) merge into one another in a loop (21) forming the locking means.

8. Mudguard arrangement as claimed in claim 7, characterised in that the distance between the two stays (18, 19) adjacent to the loop (21) is smaller than the width of the loop (21).

9. Mudguard arrangement as claimed in claim 1, characterised in that the locking device (24) comprises a housing with an insertion opening (31) for the respective stay (18, 19) which can be fastened to the blade end (12) of the corresponding fork (8).

10. Mudguard arrangement as claimed in claim 9, characterised in that the housing has adjacent to the insertion opening (31) a bag (32) receiving the respective end of the stay.

11. Mudguard arrangement as claimed in claim 9, characterised in that the housing comprises at least one plate spring (35).

12. Mudguard arrangement as claimed in claims 9 and 11, characterised in that the plate spring (35) is positioned in the interior of the housing adjacent to the insertion opening (31).

13. Mudguard arrangement as claimed in claim 12, characterised in that two plate springs (35) are provided in the housing facing each other diametrically with respect to a straight line leading through the insertion opening (31) and extending vertically relative to the plane containing the insertion opening (31).

14. Mudguard arrangement as claimed in claim 12 or 13, characterised in that the plate spring (35) or the plate springs (35) form(s) one or two side walls of the bag (32).

15. Mudguard arrangement as claimed in claim 12 or 13, characterised in that the plate spring (35) or the plate springs (35) is (are) connected to the housing so as to form one piece therewith in the vicinity of the insertion opening (31).

16. Mudguard arrangement as claimed in claim 13, characterised in that the plate springs (35) form a constriction in the bag (32).

17. Mudguard arrangement as claimed in claim 9, characterised in that the housing (24) comprises at one end a fastening bore (45) for a fastening screw (25).

## Revendications

1. Garde-boue pour roues (17) de véhicules à deux roues, notamment de bicyclettes, qui présentent des fourches (8) à l'extrémité des pattes (12) desquelles sont fixées les roues (17), avec un garde-boue (15) en métal ou en matière plastique, avec au moins une tringle (18, 19) de chaque côté de la roue (17), tringle dont l'extrémité située radialement à l'extérieur est fixée au garde-boue (15) et dont l'extrémité située radialement à l'intérieur présente un moyen d'encliquetage (21), avec un dispositif d'encliquetage (24) fixé rigidement à la fourche (8) et qui sert à recevoir par encliquetage le moyen d'encliquetage (24) de l'extrémité située radialement à l'intérieur de la tringle correspondante (18, 19), caractérisé par le fait que la tringle (18, 19) présente, en tant que moyen d'encliquetage (21), un renflement et qu'il en résulte une direction d'encliquetage parallèle au plan de la roue.

2. Garde-boue suivant la revendication 1, caractérisé en ce que le renflement servant de moyen d'encliquetage (21) est constitué par un oeillet.

3. Garde-boue suivant la revendication 2, caractérisé en ce que la tringle (18, 19) est en fil métallique et en ce que l'oeillet est formé par une boucle (21) formée par cintrage de la tringle.

4. Garde-boue suivant la revendication 1, caractérisé en ce que de chaque côté de la roue intéressée (17) sont prévues deux tringles (18, 19) qui sont dotées de moyens d'encliquetage (21) à leur extrémités situées radialement à l'intérieur.

5. Garde-boue suivant la revendication 4, caractérisé en ce que les deux tringles (18, 19) situées du même côté présentent un moyen d'encliquetage (21) commun.

6. Garde-boue suivant la revendication 4, caractérisé en ce que les deux tringles (18, 19) situées du même côté sont réunies pour constituer une seule pièce.

7. Garde-boue suivant la revendication 4, caractérisé en ce que les deux tringles (18, 19) se raccordent sous forme d'une boucle (21), qui constitue le moyen d'encliquetage.

8. Garde-boue suivant la revendication 7, caractérisé en ce qu'au voisinage de la boucle, la distance entre les deux tringles (18, 19) est inférieure à la largeur de la boucle (21).

9. Garde-boue suivant la revendication 1, caractérisé en ce que le dispositif d'encliquetage (24) présente un boîtier pouvant être fixé à l'extrémité (12) côté moyeu de la fourche (8) correspondante, ledit boîtier (31) présentant une ouverture d'enfichage (31) pour la tringle correspondante.

10. Garde-boue suivant la revendication 9, caractérisé en ce que derrière l'ouverture d'enfichage (31), le boîtier présente une poche (32) qui reçoit l'extrémité de la tringle correspondante.

11. Garde-boue suivant la revendication 9, caractérisé en ce que le boîtier contient au moins une lame de ressort (35).

12. Garde-boue suivant les revendications 9 et 11, caractérisé en la lame de ressort (35) est disposée à l'intérieur du boîtier derrière l'ouverture d'enfichage (31).

13. Garde-boue suivant la revendication 12, caractérisé en ce que le boîtier contient deux lames de ressort (35), diamétralement opposées par rapport à une droite passant par l'ouverture d'enfichage (31) et perpendiculaire au plan dans lequel est situé l'ouverture d'enfichage (31).

14. Garde-boue suivant la revendication 12 ou 13, caractérisé en ce que la lame de ressort (35), ou bien les lames de ressort (35), constituent une ou deux parois latérales de la poche (32).

15. Garde-boue suivant la revendication 12 ou 13, caractérisé en ce qu'au niveau de l'ouverture d'enfichage (31), la lame de ressort (35) ou bien les lames de ressort (35) est ou sont reliées au boîtier et constituent une pièce avec celui-ci.

16. Garde-boue suivant la revendication 13, caractérisé en ce que les lames de ressort (35) constituent un étranglement dans la poche (32).

17. Garde-boue suivant la revendication 9, caractérisé en ce qu'à une extrémité, le boîtier (24) présente une forure de fixation (46) pour une vis de fixation (25).
